Europäisches Patentamt

European Patent Office

Office européen des brevets

(19)

(11) EP 0 439 855 B1

(12) **FASCICULE DE BREVET EUROPEEN**

(45) Date de publication et mention
de la délivrance du brevet:
**10.09.1997 Bulletin 1997/37**

(21) Numéro de dépôt: **90203410.7**

(22) Date de dépôt: **18.12.1990**

(51) Int Cl.⁶: **G06F 9/38**, G06F 13/16

(54) **Microcontrôleur pour l'exécution rapide d'un grand nombre d'opérations décomposables en séquences d'opérations de même nature**

Mikrokontroller zur schnellen Ausführung einer grossen Anzahl von Befehlen, die in Folgen von gleichartigen Befehlen zerlegbar sind

Microcontroller for the fast execution of a large number of operations which are decomposable in sequences of similar operations

(84) Etats contractants désignés:
**DE FR GB SE**

(30) Priorité: **29.12.1989 FR 8917455**

(43) Date de publication de la demande:
**07.08.1991 Bulletin 1991/32**

(73) Titulaires:
• **PHILIPS COMPOSANTS ET SEMICONDUCTEURS**
**92150 Suresnes (FR)**
Etats contractants désignés:
**FR**
• **Philips Electronics N.V.**
**5621 BA Eindhoven (NL)**
Etats contractants désignés:
**DE GB SE**

(72) Inventeurs:
• **Bournas, Jean-Pierre**
**F-75008 Paris (FR)**
• **Quisquater, Jean-Jacques**
**F-75008 Paris (FR)**
• **De Waleffe, Dominique**
**F-75008 Paris (FR)**
• **Klapproth, Peter**
**F-75008 Paris (FR)**

(74) Mandataire: **Charpail, François et al**
**Société Civile S.P.I.D.**
**156, Boulevard Haussmann**
**75008 Paris (FR)**

(56) Documents cités:
**EP-A- 0 287 115**       **EP-A- 0 294 487**
**EP-A- 0 320 041**

## Description

La présente invention concerne un microcontrôleur pour l'exécution rapide d'un grand nombre d'opérations décomposable en séquences d'opérations de même nature, comportant :

- une unité centrale (CPU) pour la gestion et l'exécution d'un programme de traitement de données ;
- un ensemble de mémoires comprenant au moins une mémoire de programme pour le stockage d'un programme à exécuter par l'unité centrale, et au moins une mémoire de travail du type lecture et écriture, pour le stockage des données à traiter et des résultats successifs issus du processus de traitement, mémoire de travail qui est munie de ports d'adresses et de données ;
- un organe de traitement spécialisé pour effectuer des séquences d'opérations sur une pluralité d'opérandes présentés à ses entrées, opérandes parmi lesquels $v$ opérandes sont variables et $k$ opérandes ont un caractère de paramètre du fait qu'ils sont maintenus constants durant une séquence d'opérations ;
- un séquenceur associé à l'organe de traitement spécialisé pour déterminer le déroulement d'une séquence d'opérations ;
- une unité de registres "état et commandes" associé à l'organe de traitement spécialisé et au séquenceur, et
- un arrangement de bus internes pour échanger notamment des adresses et des données entre les éléments concernés du microcontrôleur.

D'une manière générale, il est relativement aisé de traiter rapidement un grand nombre de données au moyen d'un ordinateur, lorsque des restrictions ne sont pas imposées sur la taille et donc sur la puissance de l'ordinateur à utiliser pour cette tâche.

Cependant, on constate qu'une part notable des développements actuels, en matière de traitement de l'information, concerne des systèmes de petite taille utilisant le plus possible des dispositifs intégrant des fonctions multiples et relativement complexes. Un exemple particulièrement significatif, dans le domaine des dispositifs de traitement miniaturisés et portatifs, est représenté par les cartes intelligentes (aussi appelées "cartes à puce") susceptibles d'applications multiples, par exemple : échange de données bancaires, contrôle d'accès, authentification de signature, etc...

Pour des raisons de coût et en vue d'une très large diffusion dans le public, une carte intelligente fonctionne au moyen d'un dispositif semiconducteur intégré unique dont la structure interne prend généralement la forme d'un microcontroleur assurant à lui seul les fonctions de gestion d'un programme, de mémorisation, de traitement des données introduites aux entrées de la carte, et d'émission sur ses sorties des données traitées.

Lorsque le traitement de données à effectuer comporte un grand nombre d'opérations semblables, qui peuvent notamment être décomposées en séquences d'opérations de même nature, sur des opérandes à format réduit (8 bits par exemple) il est avantageux de prévoir, à côté d'une unité centrale à qui on réserve plutôt des tâches de gestions assez globales, un organe de traitement spécialisé, du type logique cablée, susceptible d'effectuer à grande vitesse, un certain type d'opérations arithmétiques et/ou logiques, de manière relativement autonome par rapport à l'unité centrale, au moins pendant la durée d'une séquence d'opérations ou série de cycles élémentaires de traitement successifs.

Divers problèmes liés au conflit d'accès à une mémoire partagée ont été décrits dans le document EP-A-0 320 041 (Alcatel et Bell Telephone). Ce document décrit notamment un dispositif qui comprend une unité centrale (PR) et une carte de lignes de communication (LC) lesquels accèdent de façon partagée à une mémoire commune (RAM). Le dispositif connu prévoit également un arrangement de bus internes comportant notamment un bus de données dédié exclusivement au transfert de données entre la carte de lignes et le port de données de la mémoire, ainsi qu'un multiplexeur de bus de données (MD) et un multiplexeur de bus d'adresses (MA). Cependant ce document d'art antérieur ne donne pas spécifiquement de détails sur la nature des traitements effectués par des stations éloignées reliées par les lignes de communication ni sur son adaptation à un traitement de nature multi-séquentielle.

S'agissant d'un microcontrôleur destiné à être incorporé dans une carte intelligente, on attache le plus grand soin à concilier la faible capacité en mémoires imposée par des raisons technologiques d'intégration et de coût, la vitesse d'horloge limitée également par la technologie actuellement réalisable, le format nécessairement réduit (par exemple 8 ou 16 bits) des données traitées par opération, avec la rapidité d'exécution du traitement. Pour être utilisable en pratique, la durée du traitement ne doit pas dépasser une limite de l'ordre de grandeur de la seconde, qui correspond à un temps d'attente acceptable pour l'utilisateur.

Ainsi, le microcontrôleur doit être agencé de manière à produire la plus grande efficacité de traitement possible malgré les sévères limitations des moyens mis en oeuvre, et plus précisément la taille du dispositif semiconducteur utilisé.

Par ailleurs, le fonctionnement du dispositif présenté dans le document FR-A-2 613 861 implique nécessairement des temps d'arrêts de l'organe de traitement spécialisé, notamment pour le rechargement par l'unité centrale, de nouvelles données à traiter, et également des temps d'arrêt de l'unité centrale lorsque l'accès à la mémoire de travail est requis par l'organe de traitement et prive l'unité centrale de l'accès aux bus internes d'adresses et de données. Ces temps d'arrêts entraînent un ralentissement très significatif du fonctionnement du microcontrôleur connu.

L'invention a notamment pour objet de proposer un microcontrôleur dont la structure permette, par une plus grande indépendance entre l'unité centrale et l'organe de traitement, d'éviter au maximum les temps d'arrêts de chacun d'eux, et par là-même d'accroître considérablement la rapidité du traitement.

En effet, le microcontrôleur selon l'invention est caractérisé par la revendication 1.

Dans ce qui précède on a utilisé l'expression "opérande à caractère de paramètre" pour désigner un fragment ou mot à format de travail (par exemple à 8 bits) qui est extrait d'une donnée opérande, de format beaucoup plus grand, et qui est utilisé sans changement pendant plusieurs opérations élémentaires successives formant une séquence d'opérations, mais est susceptible de prendre une valeur différente lors d'une séquence différente. Par l'expression "opérande variable", on désigne de manière analogue, un fragment à format de travail qui est extrait d'une donnée opérande de format beaucoup plus grand, mais la position du fragment dans la donnée opérande complète (et donc la valeur du mot extrait) variant successivement au cours d'une séquence d'opérations.

Le microcontrôleur selon l'invention présente l'avantage que l'organe de traitement spécialisé a accès à la mémoire de travail sans interrompre le fonctionnement de l'unité centrale durant une série d'opérations formant une séquence, et que pendant ce laps de temps, l'unité centrale est libre d'effectuer d'autres tâches complémentaires, et plus particulièrement, de modifier le contenu des registres de pointeurs d'adresses situés en amont des files d'attente en vue des données à traiter lors de la séquence suivante. L'organe de traitement, pour sa part, utilise les registres pointeurs situés en aval des files d'attente, registres qui sont incrémentés (ou décrémentés) automatiquement par le séquenceur durant une séquence d'opérations.

Cet avantage équivaut à un gain de temps très significatif étant donné que l'unité centrale opère le chargement d'un pointeur d'adresse en un temps qui est de l'ordre de 8 fois plus élevé que celui qui correspond à une opération de l'organe de traitement.

L'adresse des opérandes variables étant fournie par les registres pointeurs en aval des files d'attente il est avantageux de placer les données d'opérandes variables dans des files d'attente de manière à pouvoir effectuer les transferts simultanés au sein des files d'attente de données en une seule période d'horloge rythmant l'organe de traitement.

Un mode de réalisation de l'invention particulièrement avantageux qui s'applique au cas où le nombre $k$ d'opérandes à caractère de paramètre est supérieur à 1, se caractérise par le fait que le séquenceur et l'organe de traitement comportent des moyens de séquencement en cycles élémentaires répétitifs et des moyens de mémorisations, propres à imposer que chacun des $k$ opérandes à caractère de paramètre soit utilisé successivement par l'organe de traitement au cours d'un cycle élémentaire de traitement à $k$ pas, cycle élémentaire au cours duquel seulement une donnée de résultat est à inscrire dans la mémoire de travail.

Dans ce mode de réalisation, une séquence d'opérations se décompose maintenant en une série de cycles élémentaires successifs au cours desquels plusieurs fragments ou mots tirés d'un opérande complet sont pris en compte cycliquement, par exemple les opérandes $p_i$, $p_j$, $p_k$; $p_i$, $p_j$, $p_k$; $p_i$... etc..., les indices $i$ à $k$ représentant le rang du mot dans la donnée opérande complète à caractère de paramètre. La suite d'opérations utilisant $p_i$, $p_j$ et $p_k$ définit un cycle élémentaire d'opérations utilisant un jeu d'opérandes variables. Au cycle élémentaire suivant, d'autres opérandes variables sont utilisés et ainsi de suite jusqu'à épuisement complet des données opérandes variables complètes. L'ensemble de ces cycles élémentaires successifs forme alors ce que l'on a appelé précédemment une séquence d'opérations.

Comme il sera exposé en détail par la suite, cette disposition permet une accélération considérable du processus de traitement, et est avantageusement associée à des moyens d'initialisation propres à effectuer, au début de chaque série de cycles élémentaires, un cycle particulier d'initialisation au cours duquel l'organe de traitement charge les registres de données des $k$ opérandes à caractère de paramètre à partir d'un registre pointeur d'adresses, qui est incrémentable par l'organe de traitement.

Ainsi, lorsqu'on choisit un nombre $k$ d'opérandes à caractère de paramètre tel que k-1 = v, ($v$ étant le nombre d'opérandes variables), le bus local peut être utilisé sans interruption durant une séquence d'opérations : l'organe de traitement effectue une opération de base à chaque pas, pendant lesquels les $v$ opérandes variables sont rechargés successivement puis une donnée de résultat est inscrite. Le tout forme un cycle élémentaire d'opérations. Le fonctionnement de l'organe de traitement est alors optimal et ne contient aucun temps d'arrêt durant une séquence formée d'une suite de cycles élémentaires d'opérations. Il ne se produit pas non plus de temps d'arrêt avant le début de la séquence suivante lorsque l'unité centrale a disposé du temps nécessaire pour recharger indépendamment les pointeurs d'adresses relatifs à cette prochaine séquence.

D'autres modes particuliers de mise en oeuvre de l'invention, détails et avantage seront mis en évidence par la description qui va suivre en regards des dessins, le tout donné à titre d'exemples non limitatifs, dans lesquels :

La figure 1 représente un schéma bloc de la structure générale d'un microcontrôleur selon l'invention.

La figure 2 représente sous forme de schéma bloc, une partie du microcontrôleur de la figure 1 ainsi qu'une variante de raccordement de cette partie dans la structure générale.

La figure 3 représente le détail d'une autre partie du microcontrôleur selon l'invention, et

La figure 4 représente la structure d'un microcontrôleur selon une variante de réalisation de l'invention.

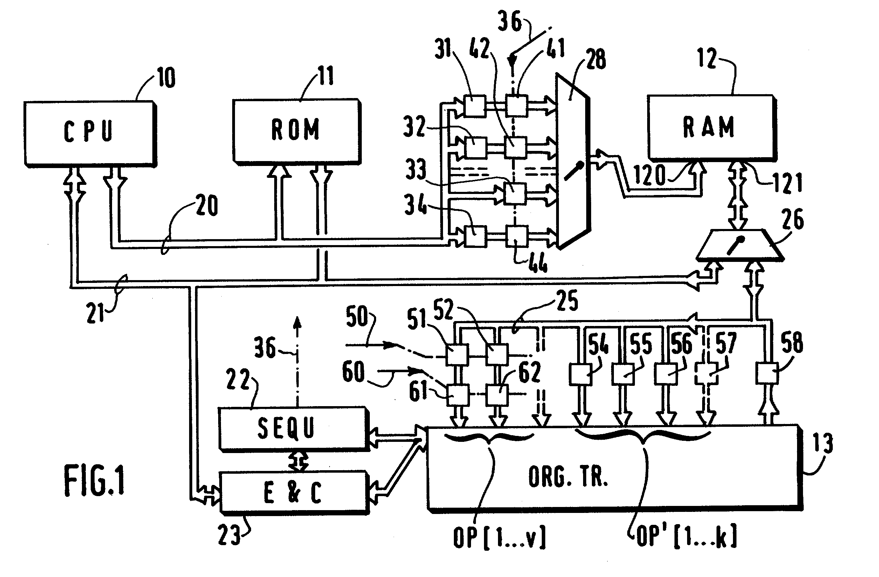

La structure générale d'un microcontrôleur selon un premier exemple de réalisation de l'invention est représentée à la figure 1. Ce microcontrôleur est constitué d'une unité centrale (CPU) 10 pour la gestion et l'exécution d'un programme de traitement de données, un ensemble de mémoires comprenant au moins une mémoire de programme (ROM) 11 pour le stockage d'un programme à exécuter par l'unité centrale 10, et au moins une mémoire de travail (RAM) 12 du type lecture et écriture, pour le stockage des données à traiter ainsi que des résultats successifs issus du processus du traitement. La mémoire de travail 12 est munie d'un port d'adresses 120 et d'un port de données 121.

Le microcontrôleur comporte encore un organe de traitement 13 spécialisé pour effectuer des séquences d'opérations sur une pluralité d'opérandes OP[1...v] et OP'[1...k] présentés à ses entrées, un séquenceur 22 associé à l'organe de traitement 13 pour déterminer le déroulement des séquences d'opérations, et une unité de registres "état et commandes" 23 associée à l'organe de traitement 13.

L'unité centrale 10 communique au moyen d'un arrangement de bus internes avec les principaux éléments du microcontrôleur. Sur la figure 1 un bus d'adresses 20 et un bus de données 21, ont été représentés.

Pour la clarté de la figure, le bus de commande n'a pas été représenté.

Le microcontrôleur selon l'invention comporte en outre, en complément au bus de données 21 qui est lié à l'unité centrale, dit premier bus de données, un bus local 25 qui est spécialisé et réservé au transfert de données entre l'organe de traitement 13 et le port de données 121 de la mémoire de travail 12. Ledit bus local 25 ainsi que ledit premier bus de données 21 peuvent accéder séparément audit port 121 de la mémoire de travail 12 via un multiplexeur de commutation de données 26. Le port d'adresses 120 de la mémoire de travail 12 est connecté à la sortie d'un multiplexeur de commutation d'adresses 28 dont les entrées communiquent avec le bus d'adresses 20 via une pluralité de registres pointeur d'adresses 31-34, 41-44. Au moins une partie de ces registres pointeur d'adresses est arrangée en files d'attente série telles que les files d'attente 31, 41 ; 32, 42.

Comme il a déjà été indiqué, les opérandes OP[1...v] et OP'[1...k] représentent des extraits à format réduit (mots de 8 ou 16 bits par exemple) de données opérandes à grand format, étant donné qu'un microcontrôleur ne peut traiter à un instant donné que des mots véhiculables par les bus de données 21, 25, eux-mêmes à format limité. Le microcontrôleur selon l'invention, étant destiné à traiter rapidement un grand nombre d'opérations qui peuvent être décomposées en opérations élémentaires successives de même nature, et chaque série d'opérations élémentaires formant ce que l'on a appelé une séquence d'opérations, on peut le plus souvent organiser le traitement à effectuer par cycle d'opérations élémentaires au cours desquels (un ou) plusieurs opérande(s) OP[1...v] (prend) prennent une valeur spécifique qui est différente à chaque pas du traitement tandis que un (ou plusieurs) opérande(s) OP'[1...k] conserve (nt) la même valeur durant une séquence déterminée. C'est le cas notamment de la multiplication de deux grandes nombres qui peut être considérée comme une suite de multiplications entre des opérandes du multiplicande -dits variables puisqu'ils sont pris successivement à chaque pas de calcul- par un opérande du multiplicateur, ce dernier étant maintenu constant pendant cette série d'opérations et appelé opérande à caractère de paramètre pour cette raison. Dans le microcontrôleur selon l'invention, il est prévu que le nombre de files d'attente de pointeur d'adresses 31, 41 ; 32, 42 ; ... est au moins égal à v+1, $\underline{v}$ correspondant au nombre d'opérandes variables auquel on ajoute une file d'attente 34, 44 destinée à pointer l'adresse du résultat de chaque cycle d'opérations. Il est alors possible de faire charger par l'unité centrale 10 l'adresse du début des opérandes variables et l'adresse du début des résultats à inscrire en prévision de la prochaine séquence de traitement, tandis que pendant la séquence en cours les registres 41, 42, ...44 sont incrémentés automatiquement (ou décrémentés) sous le contrôle du séquenceur 22. Sur la figure, la commande d'incrémentation des registres 41, 42, ...44 a été symbolisée par la flèche 36. A la fin d'une séquence de traitement, les valeurs d'adresses contenues dans les registres de tête 31, 32, 34 des files d'attente de pointeurs d'adresses peuvent être transférées dans les registres aval 41, 42, ... 44 de ces files d'attente en un seul cycle d'horloge. Le temps d'attente correspondant au rechargement des pointeurs 31, 32, 34 par l'unité centrale 10 se trouve essentiellement économisé puisque ce chargement est effectué pendant que l'organe de traitement 13 est occupé à traiter les données d'une séquence.

La présence du bus local 25 et du multiplexeur de commutation de données 26 permet à l'organe de traitement 13 d'accéder directement à la mémoire de travail 12 tandis que pendant le même temps, l'unité centrale 10 est libre de disposer du bus de données 21, par exemple pour y prélever des données dans la mémoire de programme 11. Cette disposition permet d'accroître considérablement l'efficacité de traitement du microcontrôleur selon l'invention.

Selon un mode de mise en oeuvre avantageux de l'invention, le bus local 25 alimente l'organe de traitement 13 via une pluralité de registres de données 51, 52...54, 55, 56, 57, 61, 62... dont au moins une partie est arrangée en file d'attente série 51, 61 ; 52, 62 ; ... le nombre de ces files d'attente étant au moins égal à v, ($\underline{v}$ représentant le nombre d'opérandes variables). Dans le mode de réalisation schématisé à la figure 1, le registre de données 58 est réservé à la mémorisation d'un résultat partiel issu de l'organe de traitement 13. Tandis que le bus local 25 sera occupé pour le transfert de ce résultat depuis le registre 58 vers la mémoire de travail 12, de nouveaux opérandes variables OP[1...v] peuvent être transférés au sein des files d'attente 51, 61 ; 52, 62 ; ... en vue de l'utilisation de ces nouveaux opérandes dans l'opération suivante. S'il est nécessaire de faire varier les opérandes variables OP[1...v] à chaque pas de traitement de l'organe de traitement 13 il sera donc nécessaire de disposer de v temps de cycle du bus local 25 pour recharger les v registres de données 51, 52... en plus du temps de cycle d'horloge réservé à l'écriture du résultat.

Il y a lieu d'observer que la plupart du temps il est possible d'organiser le travail de traitement des données de manière à n'avoir qu'une seule donnée de résultat à mémoriser dans la mémoire de travail à la suite de plusieurs pas élémentaires de traitement. C'est le cas notamment de l'exemple typique de la multiplication de deux grands nombres, cas dans lequel des résultats intermédiaires peuvent être immédiatement recyclés dans le pas de traitement qui suit. Diverses applications, importantes en pratique, peuvent être organisées selon ce type de traitement.

Dans un mode particulièrement avantageux de mise en oeuvre de l'invention, le microcontrôleur est agencé pour utiliser un nombre k d'opérandes à caractère de paramètres supérieur à 1, le séquenceur 22 comporte des moyens de séquencement en cycles élémentaires répétitifs et l'organe de traitement 13 comporte des moyens de commutation qui sont propres à imposer que chacun des k opérandes à caractère de paramètre soit utilisé successivement par l'organe de traitement 13 au cours d'un cycle élémentaire de traitement à k pas, cycle élémentaire au cours duquel seulement une donnée de résultats est à inscrire dans la mémoire de travail 12.

Le détail du fonctionnement peut être expliqué maintenant à l'aide d'un premier exemple dans lequel on suppose v = 2 et k = 3. Les registres de données 54, 55, 56 sont utilisés pour la mémorisation des opérandes à caractère de paramètre OP'[1], OP'[2], OP'[3]. Les données mémorisées dans ces registres sont utilisées successivement au cours d'un cycle élémentaire de traitement ayant une durée de 3 pas élémentaires ou cycles d'horloge. Durant ce cycle élémentaire à 3 pas, on effectue successivement les opérations consistant à combiner OP'[1] avec les opérandes variables OP[1] et OP[2], puis, au pas suivant, la combinaison de l'opérande OP'[2] avec les opérandes variables OP[1] et OP[2], puis enfin, la combinaison de l'opérande OP'[3] avec les opérandes variables OP[1] et OP[2]. Au cycle élémentaire suivant les opérandes variables OP[1] et OP[2] seront renouvelés tandis que les opérandes à caractère de paramètre OP'[1, 2, 3] sont maintenus durant la suite de cycles élémentaires formant une séquence d'opérations. On constate qu'il est possible d'utiliser le bus local 25 à chaque pas c'est-à-dire deux pas pour le rechargement des registres des données 51 et 52 et un pas pour le chargement en mémoire de travail 12 de la donnée de résultat précédemment mémorisée dans le registre de donnée 58. Au cours de ces trois pas élémentaires de traitement, trois traitements différents ont été exécutés et les résultats intermédiaires de deux opérations de traitement ont été recyclés au sein de l'organe de traitement 13 par des moyens propres qui seront explicités ultérieurement.

Dans cet exemple, il est clair que le chargement des deux opérandes dans les deux registres de données 51 et 52 situés en amont des files d'attente, peut être effectué à partir des registres de pointeur d'adresses situés en aval des files d'attente 41 et 42, à incrémentation (ou décrémentation) automatique, tandis que l'adresse correspondant à la donnée de résultat à mémoriser dans la mémoire de travail 12 est obtenue à partir du registre de pointeur 44 situé en aval de la file d'attente 34, 44 des pointeurs d'adresse. Le séquenceur 22 est muni de moyens appropriés pour commander le multiplexeur de commutation d'adresses 28 de manière à ce qu'il communique l'adresse appropriée au port d'adresses 120 de la mémoire de travail 12 au cours d'un cycle élémentaire d'opérations. Puisque l'organe de traitement 13 effectue un traitement à chaque pas de cycle d'horloge du bus 25 il travaille avec une efficacité maximale. Bien entendu d'autres valeurs peuvent être utilisées en ce qui concerne le nombre d'opérandes variables v et le nombre d'opérandes à caractère de paramètre k mais il est facile de constater que l'efficacité maximale est toujours obtenue lorsque les nombres k et v sont liés par la relation k - 1 = v

Pour le chargement des k opérandes à caractère de paramètre dans les registres 54, 55, 56, au début de chaque séquence d'opérations, il est avantageux de prévoir dans le séquenceur 22 des moyens propres à effectuer un cycle particulier d'initialisation au cours duquel ces k opérandes sont chargés à partir d'un registre pointeur d'adresses 33 lequel peut être incrémenté sous la commande du séquenceur 22 de manière à fournir en trois cycles d'horloge les trois valeurs de ces opérandes qui ont été mémorisées dans la mémoire de travail 12 à trois adresses consécutives. Puisque les k opérandes à caractère de paramètre à utiliser au cours de la séquence qui va suivre sont mémorisés à des adresses qui suivent immédiatement les adresses des k opérandes en cours d'utilisation, le registre pointeur 33 ne demande qu'une incrémentation pour pointer correctement la prochaine adresse de l'opérande en question, à charger au début de la séquence qui suit.

Ainsi, l'unité centrale 10 n'a pas à intervenir pour recharger le registre pointeur 33 tant que tous les opérandes OP'[1...k] mémorisés dans la mémoire de travail 12 n'ont pas été exploités.

Au moyen d'un deuxième exemple, on va illustrer une variante avantageuse de mise en oeuvre de l'invention. Le nombre k d'opérandes à caractère de paramètre est porté à quatre tandis que le nombre v d'opérandes variables est maintenu à 2. Sur la figure 1 on a représenté en pointillé un registre de données 57 supplémentaire qui est nécessaire dans ce cas. Le microcontrôleur est donc agencé de manière à permettre un cycle élémentaire de traitement à quatre pas effectuant quatre opérations de traitement au cours desquelles le bus local 25 est occupé pendant deux temps de cycle pour le rechargement dans les registres 51 et 52 des deux opérandes variables et un temps de cycle pour l'écriture dans la mémoire de travail 12 du résultat contenu dans le registre 58. Comme le cycle élémentaire d'opérations est à quatre pas, il y a un temps de cycle d'horloge pour lequel le bus local est inoccupé. Il peut néanmoins être très avantageux, dans certaines applications, de prévoir un microcontrôleur susceptible d'opérer des traitement sur six opérandes (deux opérandes variables et quatre opérandes à caractère de paramètre) au cours de certaines séquences de traitement, tandis qu'au cours d'autres séquences le nombre d'opérandes utilisés est réduit à cinq (deux opérandes variables et trois opérandes à caractère de paramètre), cas où le fonctionnement est alors optimal comme on l'a vu précédemment. Selon cette variante de mise en oeuvre, l'unité de registres "état et commandes" 23 et le séquenceur 22 sont munis de moyens de commande de séquencement permettant de faire fonctionner l'organe de traitement 13 durant une série de cycles élémentaires successifs soit avec quatre opérandes à caractère de paramètre et un cycle élémentaire à quatre pas soit avec trois opérandes à caractère de paramètre et un cycle élémentaire à trois pas, le tout sous la commande de l'unité centrale 10.

Plus généralement le microcontrôleur selon l'invention est agencé pour accepter un nombre $\underline{k}$ d'opérandes à caractère de paramètre tel que k - 1 > v et en ce qu'il comporte des moyens de commande permettant le fonctionnement soit en cycles élémentaires à $\underline{k}$ pas, soit avec $\underline{p}$ opérandes à caractère de paramètre et un cycle élémentaire à $\underline{p}$ pas, le nombre $\underline{p}$ étant inférieur à $\underline{k}$ et au moins égal à v + 1.

Pour la clarté de l'exposé, on a jusqu'ici indiqué que le chargement des adresses dans les registres pointeurs d'adresses 31-34 était effectué par l'unité centrale 10 par le canal du bus d'adresses 20. Toutefois, en pratique, on peut avoir avantage à ce que les valeurs d'adresses en question soient transmises auxdits registres 31-34 en utilisant le bus de données 21 comme voie de transmission, au lieu du bus d'adresses 20. Selon cette variante d'exécution, non représentée sur la figure 1, il suffit de connecter l'ensemble des registres pointeur d'adresses 31-41 au bus de données 21 et de prévoir néanmoins une possibilité d'accès supplémentaire par le bus d'adresses 20, mais à l'un seulement des registres 31 ou 32 ou 34, sélectionnée par un multiplexeur supplémentaire (non représenté) et réservée à une opération classique de lecture ou d'écriture dans la mémoire de travail 12, par l'unité centrale 10.

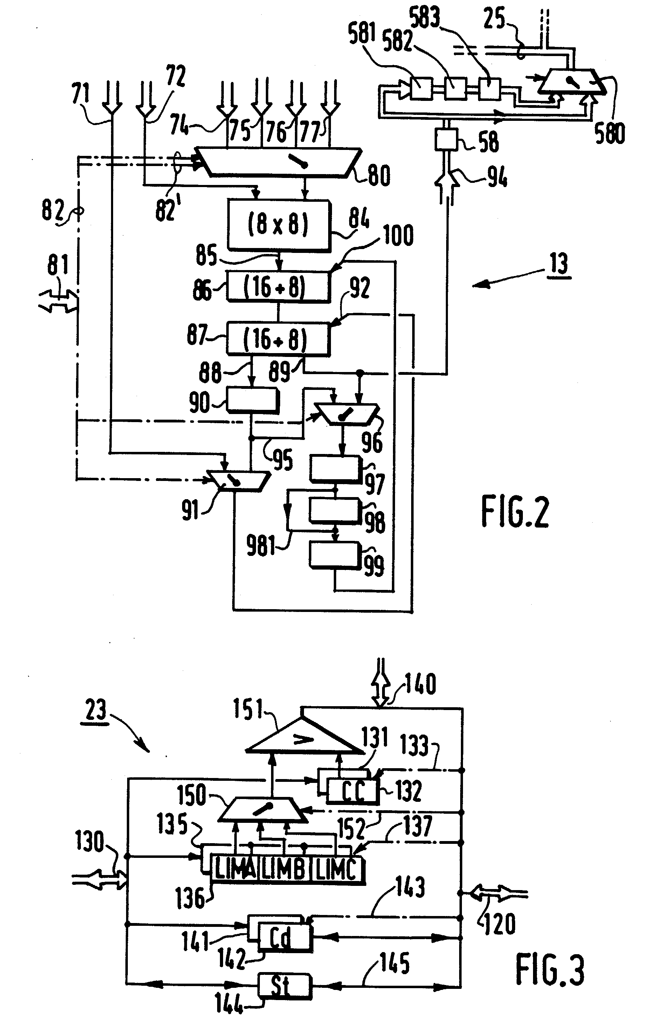

A l'aide de la figure 2 on va maintenant décrire un exemple d'organe de traitement 13. Il est précisé qu'un tel organe de traitement fait l'objet d'une demande de brevet français n°89 17456 (PHF89/624) déposée par la Demanderesse simultanément avec la présente demande, sous le titre : "Organe de traitement arithmétique à associer à une unité centrale de microprocesseur", et publiée sous le numéro FR-A-2 656 706. L'organe de traitement 13 comporte les entrées 71 et 72 communiquant avec les registres de données 61 et 62 où sont mémorisés les opérandes variables OP[1] et OP[2] ainsi que les entrées 74, 75, 76 et 77 communiquant avec les registres de données 54, 55, 56, 57 (figure 1) où sont mémorisés les opérandes OP'[1], OP'[2] .... OP'[4]. Les entrées 74 à 77 sont appliquées à un multiplexeur 80 effectuant la commutation sélectionnant l'un des opérandes à caractère de paramètre OP'[1...k] à un instant du traitement, sous la commande du séquenceur 22, commande qui est symbolisée par l'entrée de commande 81 et les lignes en traits mixtes 82. On a symbolisé sur la figure 2 par une double commande (lignes en traits mixtes 82') le fait que le multiplexeur 80 est commandé par le séquenceur non seulement pour le choix de l'opérande à caractère de paramètre à sélectionner à un instant donné du traitement mais encore pour que le cycle élémentaire soit effectué sur trois opérandes ou sur quatre opérandes.

Dans l'exemple indiqué sur la figure 2, l'organe de traitement 13 a été étudié pour réaliser un calcul correspondant à la formule générale :

$$B = aX + A$$

dans laquelle :

B est un grand nombre et correspond à un résultat (intermédiaire en général) dont les valeurs partielles successives sont mémorisées dans la mémoire de travail 12 via le registre 58,
X est un grand nombre dont les extraits successifs sont présentés à l'entrée de données 72,
A est un grand nombre dont les extraits successifs sont présentés à l'entrée de donnée 71, et
a est un opérande à caractère de paramètre dont les extraits OP'[1...k] sont présentés aux entrées 74 à 77.

Pour effectuer ce type d'opération, l'organe de traitement comporte essentiellement un multiplieur 84 de 8x8 bits fournissant un résultat à 16 bits en sortie 85, suivi d'un premier additionneur 86 de 16 + 8 bits, lequel est suivi d'un second additionneur 87 également de 16 + 8 bits. Les 16 bits de sortie du second additionneur 87 sont partagés en partie haute sur la sortie 88 correspondant aux poids forts du résultat de la seconde addition, et en partie basse sur la sortie 89 correspondant aux poids faibles de cette addition. La partie haute du résultat en sortie 88 est mémorisée dans un registre tampon 90. Cette valeur est normalement recyclée sur l'entrée 92 du deuxième additionneur 87 pour le pas de calcul suivant, via un multiplexeur 91, quand cette valeur aura atteint le rang de poids correspondant. Cependant, à chaque premier pas d'un cycle de trois pas, le multiplexeur 91 est commuté de manière à prélever l'opérande variable disposé à l'entrée 71 et le transmet à l'entrée 92 du deuxième additionneur 87. C'est également lors de chaque premier pas de cycle que la partie basse (8 bits de poids faibles) en sortie 89 du second additionneur 87 est placée dans le registre 58 via la sortie de données 94, en tant que résultat de ce cycle d'opérations. Enfin, c'est encore au cours de chaque premier pas de cycle que la donnée précédemment mémorisée dans le registre tampon 90 est transférée via un multiplexeur 96, en tête d'une série de registres tampons 97, 98, 99, pour son utilisation à l'entrée du deuxième additionneur 87, au moment opportun, c'est-à-dire au dernier pas du même cycle.

En dehors des premiers pas de cycles, le multiplexeur 96 est positionné de manière à ce que le registre 97 reçoive la donnée de poids faibles en sortie 89 du deuxième additionneur 87. Après quoi, les données contenues dans chacun des registres 97, 98, 99 sont transmises dans le registre qui le suit dans cette pile. (La donnée contenue dans le registre 99 a été utilisée et se trouve éliminée).

De cette manière, on obtient un recyclage convenable des données intermédiaires de calcul à l'entrée 100 du premier additionneur 86.

Il est à noter que si l'organe de traitement 13 doit travailler sur trois opérandes à caractère de paramètre (k = 3 et entrée 74 non utilisée), le recyclage correct des données intermédiaires au moyen de la pile de registres 97-99 est obtenu lorsque l'un des registres, par exemple le registre 98, est évité ; ce qui, pour la simplicité, a été représenté symboliquement sur la figure 2 par une liaison 981, bien qu'en réalité cet effet soit obtenu au moyen d'un multiplexeur (non représenté).

Comme indiqué sur la figure 2, par des lignes en traits mixtes, les multiplexeurs 91 et 96 sont actionnés par le séquenceur 22 à partir de l'entrée de commande 81.

A la fin d'une séquence de traitement et lorsque les données des opérandes variables présentées sur les entrées 71 et 72 ont été épuisées, on place des zéro sur ces entrées (les registres 51 et 52 - figure 1 - sont forcés à zéro) en attendant que les valeurs mémorisées dans les registres tampons de l'organe de traitement 13 soient recyclées et évacuées sous forme de résultats en sortie 94. Il y a lieu de noter que les cycles d'un tel "vidage" de l'organe de traitement 13 obéissent à la même loi de séquencement que les autres cycles de calcul travaillant sur des opérandes non nuls.

La figure 2 montre également une variante de la structure du microcontrôleur de la figure 1 visant à économiser des emplacements de mémorisation dans la mémoire de travail 12, et qui s'applique lorsque le traitement des données à effectuer par le microcontrôleur comporte au moins une séquence pour laquelle un certain nombre de données de poids forts des résultats sont à réutiliser au cours de la séquence suivante en tant qu'opérandes à caractère de paramètre. A cet effet, les données à la sortie 94 de l'organe de traitement sont mémorisées dans un registre de données 58 mais, contrairement à ce qui a été représenté à la figure 1, ce registre 58 est relié au bus local 25 par un multiplexeur 580. Le résultat peut aussi être empilé dans des registres tampons 581, 582 et 583. Les registres 581, 582 et 583 forment une file d'attente de registres de données à (k - 1) positions pour les données de résultat, l'usage ou non de cette attente ést déterminée par le multiplexeur 580. Au cours d'une séquence d'opérations, les résultats successifs sont mémorisés dans la mémoire de travail 12 à partir du registre de données 58, le multiplexeur 580 étant commuté dans la position d'accès direct au bus local 25. A la fin de la séquence, les 4 derniers mots de résultat des poids les plus forts se trouvent également mémorisés dans les registres 58, 581, 582 et 583. Avant le début de la séquence d'opérations suivantes, le multiplexeur 580 est alors commuté sur son entrée correspondant à la sortie de la file d'attente (registres 581, 582, 583) et les 4 dernières données de résultats peuvent être transférées via le bus local 25, successivement, dans les registres de données 54, 55, 56, 57 (voir figure 1) sans intervention de l'unité centrale 10.

Dans certaines applications, il n'est pas nécessaire de mémoriser en mémoire de travail 12 les quatre mots de résultat de poids forts en question de sorte que la séquence est interrompue quatre cycles auparavant, et la mémoire de travail peut être réduite de quatre octets. Ainsi, le nombre de cycles à effectuer et le mode de fonctionnement de l'organe de traitement 13 sont déterminés par le séquenceur 22 à partir d'un mot de commande chargé par l'unité centrale 10 dans un registre de commande faisant partie de l'unité de registres "état et commandes" 23 qui va maintenant être décrit.

La figure 3 donne le schéma d'un exemple d'unité de registres état et commandes tel qu'indiqué à la référence 23 de la figure 1. La liaison avec le premier bus de données 21 est symbolisée au repère 130. Cette liaison permet à l'unité centrale 10 de charger un registre amont 131 de compteur de cycles lequel possède un registre image 132 dont la valeur est initialisée avec le contenu du registre 131 puis décrémentée sous la commande du séquenceur 22. La commande de transfert et de décrémentation est symbolisée par la ligne en traits mixtes 133 faisant partie de la liaison audit séquenceur symbolisée sur la figure au repère 140. L'unité centrale 10 peut encore charger par la liaison 130, trois registres 135, dits registres de limites dont le contenu peut être transféré dans des registres images 136 (notés sur la figure LIM A, LIM B et LIM C). Le transfert des registres de limite 135 vers les registres images 136 est effectué par la commande 137 en provenance du séquenceur 22 via la liaison de commande 140. L'unité de registres état et commandes 23 comporte encore un registre de commande 141 et son registre image 142, le transfert de contenu étant commandé par le séquenceur 22 et symbolisé par la liaison 143, ainsi qu'un registre de statut 144 relié au premier bus 21 par la liaison 130 et à l'organe de traitement 13 par la liaison 145.

Le contenu du registre compteur de cycles 132 est comparé à l'une des limites LIM A, LIM B ou LIM C au moyen d'un comparateur 151, par l'intermédiaire d'un multiplexeur 150 sélectionnant, au moyen de la commande 152, le type de limite à surveiller. Au moyen du comparateur 151 on peut donc agir sur le mode de fonctionnement de l'organe de traitement 13 pour exécuter une séquence déterminée. Le registre double de commande 141, 142 contient les informations nécessaires à la commande de fonctionnement de l'organe de traitement 13, par exemple, un bit pour le lancement de l'organe de traitement 13, un bit pour indiquer lequel des modes de fonctionnement est à utiliser (le nombre d'opérandes à caractère de paramètre à mettre en jeu) un bit indiquant si les opérandes à caractère de paramètre doivent être chargés à partir de la mémoire de travail 12 ou à partir de la file d'attente des registres de stockage des données de résultat, (registres 58, 581, 582, 583). Le registre de statut 144 complète le registre de commande 142, dans lequel on peut réserver par exemple un bit pour indiquer que l'organe de traitement a terminé une série de cycle d'opérations, un bit pour la présence d'une retenue au sein des résultats en cours de traitement par l'organe de traitement 13 et éventuellement des bits réservés à la commande de désactivation de lecture ou d'écriture de certains opérandes ainsi que la mise à zéro de ces opérandes dans les registres de données correspondants.

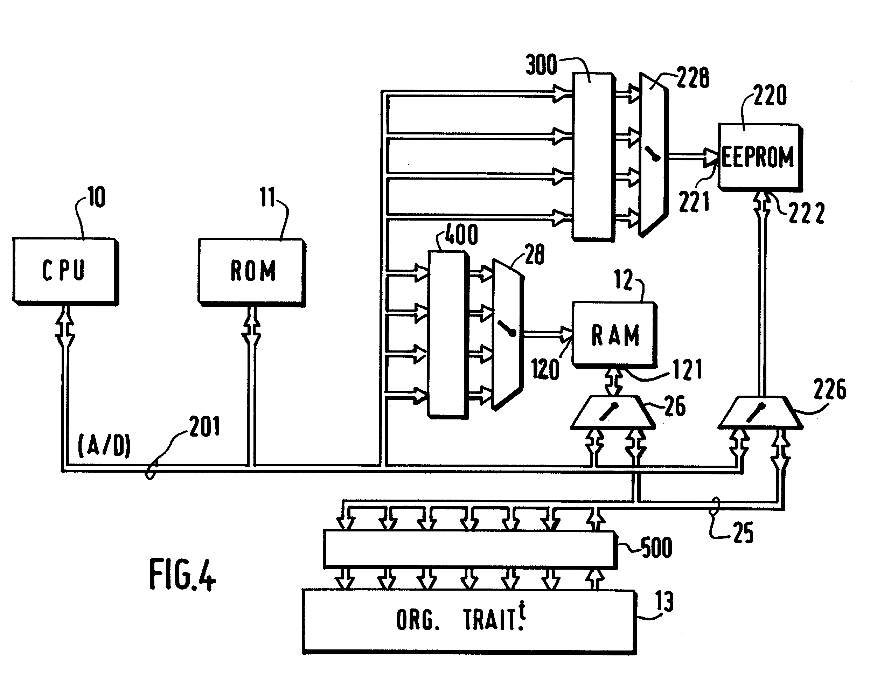

La figure 4 est une vue schématique d'un autre mode de mise en oeuvre du microcontrôleur selon l'invention. Sur cette figure, les éléments correspondants aux éléments de la figure 1 sont indiqués avec les mêmes signes de référence. De plus, à la figure 4, et pour plus de clarté, le séquenceur, l'unité de registre d'état et commandes n'ont pas été représentés ni les liaisons de commande entre les différents éléments du microcontrôleur. Le microcontrôleur de la figure 4 se différencie de celui représenté à la figure 1, en premier lieu, par le fait que les adresses et les données transitent à partir de l'unité centrale 10 à l'aide d'un seul bus 201 où les adresses et les données sont multiplexées temporellement. Pour la clarté de la figure, l'ensemble des registres des données interposé entre le bus local 25 et l'organe de traitement 13 a été symbolisé par le bloc 500. Ces registres de données, y compris des files d'attente, peuvent être essentiellement identiques à ceux précédemment décrits à propos de la figure 1.

Le microcontrôleur de la figure 4 se distingue également de celui précédemment décrit par le fait qu'il utilise deux mémoires de travail, une mémoire RAM 12 et une mémoire non volatile par exemple une EEPROM 220. En ce qui concerne la mémoire RAM 12, son port d'adresses 120 est relié au bus interne 201 lié à l'unité centrale 10 de la même manière que ce qui a été décrit à la figure 1, c'est-à-dire via un multiplexeur de commutation d'adresses 28 et un ensemble de registres pointeurs d'adresses y compris un certain nombre de files d'attente, l'ensemble de ces registres pointeurs d'adresses étant symbolisé par le bloc 400. L'architecture entourant la mémoire EEPROM 220 est très semblable à celle qui entoure la mémoire RAM 12 c'est-à-dire que son port d'adresses 221 est lié au bus 201 via un autre multiplexeur de commutation d'adresses 228 et un ensemble de registres pointeurs d'adresses 300 comportant également des files d'attente. L'ensemble de pointeurs d'adresses 300 est très comparable à l'ensemble de pointeurs d'adresses 400 lié à la mémoire RAM 12. En ce qui concerne le port de données 222 de la mémoire EEPROM 220, ce port peut être relié soit au bus interne 201 (lié à l'unité centrale 10) soit au bus local 25, par l'intermédiaire d'un multiplexeur de commutation de données 226 associé à cette mémoire EEPROM 220. Du fait que l'opération d'écriture dans une mémoire EEPROM est comparativement lente il est préférable de réserver l'accès à cette mémoire par l'organe de traitement 13 uniquement pour des opérations de lecture qui sont aussi rapides que les lectures effectuées dans la mémoire RAM 12.

La description donnée à titre d'exemple et particulièrement la description de l'organe de traitement 13 indiquée au regard de la figure 2, sont plus spécialement orientées vers une application où l'essentiel du traitement peut être décomposé en une opération du type B = aX + A. Néanmoins il est clair que le microcontrôleur selon l'invention est d'application beaucoup plus générale, notamment en modifiant la composition de l'organe de traitement 13 et en l'optimisant spécifiquement aux problèmes du traitement recherché. L'invention n'est donc pas limitée aux exemples de réalisations décrits ci-dessus et on pourra prévoir d'autres modes et d'autres formes de réalisation.

**Revendications**

1. Microcontrôleur pour l'exécution rapide d'un grand nombre d'opérations décomposables en séquences d'opérations de même nature, comportant :

   - une unité centrale (10) pour la gestion et l'exécution d'un programme de traitement de données,
   - un ensemble de mémoires comprenant au moins une mémoire de programme (11) pour le stockage d'un programme à exécuter par l'unité centrale, et au moins une mémoire de travail (12) du type à lecture et écriture, pour le stockage des données à traiter et des résultats successifs issus du processus de traitement, mémoire de travail qui est munie de ports d'adresses (120) et de données (121),
   - un organe de traitement spécialisé (13) pour effectuer des séquences d'opération sur une pluralité d'opérandes présentés à ses entrées, opérandes parmi lesquels $\underline{v}$ opérandes (OP[1... v]) sont variables et $\underline{k}$ opérandes (OP'[1..,k]) ont un caractère de paramètre du fait qu'ils sont maintenus constants durant une séquence d'opérations,

- un séquenceur (22) associé à l'organe de traitement spécialisé (13) pour déterminer le déroulement d'une séquence d'opération,
- une unité de registres d'état et de commandes (23) associée à l'organe de traitement spécialisé et au séquenceur,
- un arrangement de bus internes pour échanger des adresses et des données comprenant un premier bus (21) lié à l'unité centrale (10), véhiculant au moins des données et un bus local spécialisé (25), réservé au transfert de données entre l'organe de traitement (13) et le port de données (121) de la mémoire de travail (12), ces deux bus accédant chacun audit port de données de la mémoire de travail via un multiplexeur de commutation de données (26), microcontrôleur dans lequel le port d'adresses (120) de la mémoire de travail (12) est alimenté par la sortie d'un multiplexeur de commutation d'adresses (28) recevant sur ses entrées des adresses chargées exclusivement par l'unité centrale (10) dans une pluralité de registres pointeurs d'adresses (31, 32, 33, 34) disposés en parallèle, une partie de ceux-ci constituant des registres amont de files d'attente série (31-41, 32-42, 34-44), registres pointeurs à chacun desquels est alors associé un registre aval (41, 42, 44) qui peut être incrémenté ou décrémenté par le séquenceur (22), le nombre desdites files d'attente étant au moins égal à $\underline{v}$ + 1 correspondant au nombre v d'opérandes variables augmenté d'une file d'attente pour l'adresse d'un résultat d'opération à inscrire en mémoire de travail,

tandis que le bus local spécialisé (25) est couplé à des entrées de l'organe de traitement (13) via une pluralité de registres de données (51 - 58), disposés en parallèle, une partie de ceux-ci constituant des registres amont de files d'attente série (51-61, 52-62), le nombre desdites files d'attente étant au moins égal à $\underline{v}$.

2. Microcontrôleur selon la revendication 1 dans lequel le nombre $\underline{k}$ d'opérandes à caractère de paramètre est >1, caractérisé en ce que le séquenceur (22) et l'organe de traitement (13) comportent des moyens de séquencement en cycles élémentaires répétitifs et des moyens de mémorisations, propres à imposer que chacun des $\underline{k}$ opérandes à caractère de paramètre soit utilisé successivement par l'organe de traitement au cours d'un cycle élémentaire de traitement à $\underline{k}$ pas, cycle élémentaire au cours duquel seulement une donnée de résultat est à inscrire dans la mémoire de travail (12).

3. Microcontrôleur selon la revendication 2, caractérisé en ce qu'il contient des moyens d'initialisation propres à effectuer, au début de chaque séquence d'opérations, un cycle particulier d'initialisation au cours duquel l'organe de traitement (13) charge les registres de données (54-57) des $\underline{k}$ opérandes à caractère de paramètre à partir d'un registre pointeur d'adresses (33), a incrémentation automatique.

4. Microcontrôleur selon l'une des revendications 2 ou 3, caractérisé en ce qu'il utilise un nombre $\underline{k}$ d'opérandes à caractère de paramètre tel que k-1 = v, $\underline{v}$ étant le nombre d'opérandes variables.

5. Microcontrôleur selon l'une des revendications 2 ou 3, caractérisé en ce qu'il est agencé pour accepter un nombre $\underline{k}$ d'opérandes à caractère de paramètre tel que k-1 > v et en ce qu'il comporte des moyens de commande de séquencement permettant de faire fonctionner l'organe de traitement durant une séquence de traitement et sous le contrôle de l'unité centrale (10), soit avec $\underline{k}$ opérandes à caractère de paramètre et un cycle élémentaire à $\underline{k}$ pas, soit avec $\underline{p}$ opérandes à caractère de paramètre et un cycle élémentaire à $\underline{p}$ pas, le nombre $\underline{p}$ étant inférieur à $\underline{k}$ et au moins égal à v + 1.

6. Microcontrôleur selon l'une quelconque des revendications 2 à 5, caractérisé en ce que les données de résultat, en sortie de l'organe de traitement (13) transitent vers le bus local (25) via un registre de données (58) en série avec une file d'attente de registre de données (581,582,583) dont le nombre de positions est égal à k-1, et en ce que ladite file d'attente peut être évitée au moyen d'une commutation (580) commandée par le séquenceur (22).

7. Microcontrôleur selon la revendication 6, caractérisé en ce que les moyens d'initialisations sont agencés pour procurer au début d'une séquence d'opérations, un autre cycle particulier d'initialisation au cours duquel l'organe de traitement charge les registres de données (54-57) des $\underline{k}$ opérandes à caractère de paramètre à partir de la file d'attente de registres de données (581,582,583) prévue en sortie de résultats, et via le bus local (25).

8. Microcontrôleur selon l'une quelconque des revendications 1 à 7, caractérisé en ce que l'unité centrale (10), la mémoire de programme (11), le multiplexeur de commutation d'adresses (28) et le multiplexeur de commutation de données (26) échangent des adresses et des données au moyen d'un seul bus multiplexé (201).

9. Microcontrôleur selon l'une quelconque des revendications 1 à 8 caractérisé en ce que les adresses et les données transitent sous un format unique à 8 bits.

10. Microcontroleur selon l'une quelconque des revendications 1 à 9, caractérisé en ce que la mémoire de travail se compose d'une portion du type mémoire RAM (12) ainsi que d'une autre portion d'un type non volatile (220), en ce que les ports de données (121,222) de ces portions de mémoire peuvent être mis en communication soit avec ledit premier bus de données (201), soit avec le bus local (25), au moyen d'un multiplexeur de commutation de données (26,226) propre à chacune de ces portions de mémoire, et en ce que les ports d'adresses (120,221) de ces portions de mémoire sont alimentés à travers un multiplexeur de commutation d'adresses (28,228), propre à chacune de ces portions de mémoire, à partir du bus d'adresses (20) ou dudit premier bus de données (201), via une pluralité de registres pointeurs d'adresses (400,300), incluant pour chacune desdites portions de mémoire, un nombre de files d'attente au moins égal à v + 1.

## Patentansprüche

1. Mikrokontroller zur schnellen Ausführung einer großen Anzahl von in gleichartige Befehle zerlegbaren Befehlen mit:

   - einer Zentraleinheit (10) zur Steuerung und Ausführung eines Datenverarbeitungsprogramms,
   - einer Gesamtheit von Speichern mit wenigstens einem Programmspeicher (11) zur Speicherung eines von der Zentraleinheit auszuführenden Programms und mit wenigstens einem Arbeitsspeicher (12) des Lese/Schreibe-Typs zur Speicherung von zu verarbeitenden Daten und der späteren, aus dem Verarbeitungsprozeß hervorgehenden Ergebnisse, wobei der Arbeitsspeicher mit Adressen(120) und Datenports (121) versehen ist,
   - einem spezialisierten Verarbeitungsorgan (13), um Sequenzen von Operationen mit einer Vielzahl von Operanden durchzuführen, die seinem Eingang zugeführt werden, wobei unter den Operanden v Operanden (OP[1..,v]) variabel sind und k Operanden (OP'[1...k] parametrischer Art sind, da sie während einer Sequenz von Operationen konstant beibehalten werden,
   - einer zu dem spezialisierten Verarbeitungsorgan (13) gehörenden Sequenzsteuerung (22), um den Ablauf einer Sequenz von Operationen zu bestimmen,

   - einer zu dem spezialisierten Verarbeitungsorgan und der Sequenzsteuerung gehörenden Zustand-und-Befehls-Registereinheit (23) und
   - einer internen Busanordnung, um Adressen und Daten auszutauschen, mit einem mit der Zentraleinheit (10) verbundenen ersten Bus (21), der wenigstens Daten befördert und einem spezialisierten Bus (25), der für die Übertragung von Daten zwischen dem Verarbeitungsorgan (13) und dem Datenport (121) des Arbeitsspeichers (12) reserviert ist, wobei jeder dieser beiden Busse auf den genannten Datenport des Arbeitsspeichers über einen Datenschaltmultiplexer (26) zugreift, der Adreßport (120) des Arbeitsspeichers (12) im Mikrokontroller durch den Ausgang eines Adreßschaltmultiplexers (28) gespeist wird, der an seinen Eingängen Adressen empfängt, die ausschließlich durch die Zentraleinheit (10) in eine Vielzahl von parallel angeordneten Adreßzeigerregistern (31, 32, 33, 34) geladen werden, wobei ein Teil von diesen letzteren oberhalb befindliche Register von seriellen Warteschlangen (31-41, 32-42, 34-44) bildet, wobei jedem dieser Zeigerregister dann ein Register unterhalb (41, 42, 44) zugeordnet ist, das durch eine Sequenzsteuerung (22) inkrementiert oder dekrementiert werden kann, wobei die Anzahl der genannten Warteschlangen wenigstens gleich v + 1 ist, entsprechend der Anzahl von v variablen Operanden plus eine Warteschlange für die Adresse eines in den Arbeitsspeicher zu schreibenden Operationsergebnisses,

während der spezialisierte lokale Bus (25) mit Eingängen des Verarbeitungsorgans (13) über eine Vielzahl von parallel angeordneten Datenregistern (51-58) gekoppelt ist, wobei ein Teil von diesen letzteren oberhalb befindliche Register von seriellen Warteschlangen (51-61, 52-56) bildet und die Anzahl der genannten Warteschlangen wenigstens gleich v ist.

2. Mikrokontroller nach Anspruch 1, bei dem die Anzahl k von Operanden parametrischer Art > 1 ist, dadurch gekennzeichnet, daß die Sequenzsteuerung (22) und das Verarbeitungsorgan (13) Mittel zur Sequenzierung in wiederholten Einzelzyklen und Speichermittel umfassen, die festlegen können, daß jeder der k Operanden parametrischer Art nacheinander von dem Verarbeitungsorgan während eines Einzelverarbeitungszyklus mit k Schritten verwendet wird, wobei während dieses Einzelzyklus nur ein Ergebnisdatenelement in den Arbeitsspeicher (12) zu schreiben ist.

3. Mikrokontroller nach Anspruch 2, dadurch gekennzeichnet, daß er Initialisierungsmittel enthält, die geeignet sind, zu Beginn jeder Serie von Einzelzyklen einen besonderen Initialisierungszyklus auszuführen, während dessen Dauer das Verarbeitungsorgan (13) die Datenregister (54-57) mit den k Operanden parametrischer Art aus einem Adreßzeigerregister (33) mit automatischer Inkrementierung lädt.

4. Mikrokontroller nach einem der Ansprüche 2 oder 3, dadurch gekennzeichnet, daß er eine Anzahl k von Operanden parametrischer Art verwendet, so daß k-1 = v, wobei v die Anzahl der variablen Operanden ist.

5. Mikrokontroller nach einem der Ansprüche 2 oder 3, dadurch gekennzeichnet, daß er so eingerichtet ist, daß er eine Anzahl von k Operanden parametrischer Art akzeptiert, so daß k-1 > v und daß er Steuerungsmittel umfaßt, die die Funktionsweise während einer Verarbeitungssequenz unter Steuerung der Zentraleinheit (10) entweder mit k Operanden parametrischer Art und einem Einzelzyklus mit k Schritten oder mit p Operanden parametrischer Art und einem Einzelzyklus mit p Schritten ermöglichen, wobei die Anzahl p kleiner k und wenigstens gleich v + 1 ist.

6. Mikrokontroller nach einem der Ansprüche 2 bis 5, dadurch gekennzeichnet, daß die Ergebnisdaten am Ausgang des Verarbeitungsorgans (13) zum lokalen Bus (25) über ein Datenregister (58) übertragen werden, das sich in Reihe mit einer Datenregisterwarteschlange (581, 582, 583) befindet, deren Anzahl von Positionen gleich k-1 ist, und daß die genannte Warteschlange mittels einer durch die Sequenzsteuerung (22) gesteuerten Umschaltung umgangen werden kann.

7. Mikrokontroller nach Anspruch 6, dadurch gekennzeichnet, daß die Initialisierungsmittel eingerichtet sind, um zu Beginn einer Sequenz von Operationen einen anderen besonderen Initialisierungszyklus zu liefern, während dessen Dauer das Verarbeitungsorgan die Datenregister (54-57) mit k Operanden parametrischer Art aus der am Ergebnisausgang eingerichteten Datenregister-Warteschlange (581, 582, 583) über den lokalen Bus (25) lädt.

8. Mikrokontroller nach einem der Ansprüche 1 bis 7, dadurch gekennzeichnet, daß die Zentraleinheit (10), der Programmspeicher (11), der Adreßschaltmultiplexer (28) und der Datenschaltmultiplexer (26) Adressen und Daten mittels eines einzigen gemultiplexten Busses (201) übertragen.

9. Mikrokontroller nach einem der Ansprüche 1 bis 8, dadurch gekennzeichnet, daß die Adressen und Daten in einem einzigen Format mit 8 Bits übertragen werden.

10. Mikrokontroller nach einem der Ansprüche 1 bis 9, dadurch gekennzeichnet, daß sich der Arbeitsspeicher aus einem Teil vom RAM-Speichertyp (12) und aus einem anderen Teil vom nicht-flüchtigen Typ (220) zusammensetzt, daß die Datenports (121, 222) dieser Teile entweder mit dem genannten ersten Datenbus (201) oder mit dem lokalen Bus mittels eines jedem dieser Speicherteile eigenen Datenschaltmultiplexers (26, 226) in Verbindung gebracht werden können und daß die Adreßports (120, 221) dieser Speicherteile durch einen jedem Speicherteil eigenen Adreßschaltmultiplexer (28, 228) hindurch aus dem Adreßbus (20) oder dem genannten ersten Datenbus (201) über eine Vielzahl von Adreßzeigerregistern (400, 300) gespeist werden, die für jeden der genannten Speicherteile eine Anzahl von Warteschlangen enthalten, die wenigstens gleich v + 1 ist.

**Claims**

1. A microcontroller for the fast execution of a large number of operations which can be decomposed into sequences of operations of the same kind, comprising :

   - a central processing unit (10) for the management and execution of a data processing program;
   - a set of memories, comprising at least one program memory (11) for the storage of a program to be executed by the central processing unit, and at least one working memory (12) of the read/write type for the storage of the data to be processed and of the successive results produced by the processing procedure, said working memory being provided with address ports (120) and data ports (121);
   - a specialized processing module (13) for carrying out sequences of operations on a plurality of operands applied to its inputs, said operands including v operands (OP[1...v]) which are variable and k operands (OP'[1...k]) which are of the parameter type because they are maintained constant during a sequence of operations;
   - a sequencer (22) associated with the specialized processing module (13) in order to determine the running of a sequence of operations;
   - a status and controls register unit (23) associated with the specialized processing module and with the sequencer;
   - an internal bus arrangement for exchanging particular, addresses and data, comprising a first bus (21) which is connected to the central processing unit (10) and transports at least data, and a specialized local bus (25) which is reserved for the transfer of data between the processing module (13) and the data port (121) of the working memory (12), each of said two buses accessing said data port of the working memory via a data switching multiplexer (26), the address post (120) of the working memory (12) in the microcontroller being fed by the output of an address switching multiplexer (28) whose inputs receive addresses loaded exclusively by the central processing unit (10) in a plurality of address pointer registers (31, 32, 33, 34) which are connected in parallel and some of which constitute upstream serial queue registers (31-41, 32-42, 34-44), each of said pointer registers being associated with a downstream register (41, 42, 44) which can be incremented or decremented by the sequencer (22), the number of said queues being at least equal to $\underline{v}$ + 1, corresponding to the number $\underline{v}$ of variable operands increased by one queue for the addresses of an operation result to be written into the working memory, the specialized local bus (25) being coupled to inputs of the processing module (13) via a plurality of data registers (51-58) which are connected in parallel and some of which constitutes upstream serial queue registers (51-61, 52-62), the number of said queues being at least equal to $\underline{v}$.

2. A microcontroller as claimed in Claim 1 in which the number $\underline{k}$ of operands of parameter type is > 1, characterized in that the sequencer (22) and the processing module (13) comprise means for sequencing in repetitive elementary cycles and means for storage which are capable of ensuring that each of the $\underline{k}$ operands of parameter type are used successively by the processing module during an elementary processing cycle of $\underline{k}$ steps, only one result datum having to be written into the working memory (12) during such an elementary cycle.

3. A microcontroller as claimed in Claim 2, characterized in that it includes initialization means which are capable of performing, at the start of each sequence of operations, a special initialization cycle during which the processing module (13) loads the data registers (54-57) with $\underline{k}$ operands of parameter type from an address pointer register (33) which is automatically incremented.

4. A microcontroller as claimed in one of the Claims 2 or 3, characterized in that it uses a number $\underline{k}$ of operands of parameter type such that k-1 = v, $\underline{v}$ being the number of variable operands.

5. A microcontroller as claimed in one of the Claims 2 or 3, characterized in that it is arranged to accept a number $\underline{k}$ of operands of parameter type such that k-1 > $\underline{v}$ and that it comprises sequencing control means enabling the processing module to operate during a processing sequence and under the control of the central processing unit (10), either with $\underline{k}$ operands of parameter type and an elementary cycle of $\underline{k}$ steps, or with $\underline{p}$ operands of parameter type and an elementary cycle of $\underline{p}$ steps, the number $\underline{p}$ being less than $\underline{k}$ and at least equal to v+1.

6. A microcontroller as claimed in any one of the Claims 2 to 5, characterized in that the result data, at the output of the processing module (13), transit to the local bus (25) via a data register (58) in series with a queue of data registers (581, 582, 583), the number of positions of which is equal to k-1, and that said queue can be avoided by means of a switching operation (580) controlled by the sequencer (22).

7. A microcontroller as claimed in Claim 6, characterized in that the initialization means are arranged to provide, at the start of a sequence of operations, another special initialization cycle during which the processing module loads the data registers (54-57) with the $\underline{k}$ operands of parameter type from the queue of data registers 581, 582, 583), provided at the result output, and via the local bus 25).

8. A microcontroller as claimed in any of the Claims 1 to 7, characterized in that the central processing unit (10), the program memory (11), the address switching multiplexer (28) and the data switching multiplexer (26) exchange addresses and data by means of a single multiplexed bus (201).

9. A microcontroller as claimed in any one of the Claims 1 to 8, characterized in that the addresses and the data transit in a single 8-bit format.

10. A microcontroller as claimed in any of the Claims 1 to 9, characterized in that the working memory is composed of a section of a RAM-type memory (12) and another section of a non-volatile type (220), that the data ports (121, 122) of these memory sections can be made to communicate either with said first data bus (201) or with the local bus (25) by means of a data switching multiplexer (26, 226) associated with each of these memory sections, and that the address ports (120, 221) of these memory sections are fed via an address switching multiplexer (28, 228), associated with each of these memory sections, from the address bus (20) or said first data bus (201) via a plurality of address pointer registers (400, 300), including for each of said memory sections a number of queues which is at least equal to

v + 1.

FIG.1

ROM
RAM
CPU
SEQU
E & C
ORG. TR.

OP'[1...k]
OP[1...v]

FIG.2

FIG.3

FIG.4

EP 0 439 855 B1